# EUROPEAN PATENT SPECIFICATION

(11) **EP 0 601 524 B1**
(45) Date of publication and mention of the grant of the patent: **22.07.1998**
(21) Application number: 93119645.5
(22) Date of filing: 06.12.1993
(51) Int. Cl.: C08F 10/00, C08F 4/654

(54) **Process for the preparation of (co)polymers of ethylene having a broad molecular weight distribution**
Verfahren zur Herstellung von (co)Polymeren von Ethylen mit breiter Molekulargewichtsverteilung
Procédé de préparation de (co)polymères d'éthylène ayant une large distribution des poids moléculaires

(30) Priority: 11.12.1992 IT MI922821
(43) Date of publication of application: 15.06.1994
(73) Proprietor: Montell Technology Company bv, 2132 MS Hoofddorp (NL)
(72) Inventor: Cuffiani, Illaro, I-44100 Ferrara (IT); Sacchetti, Mario, I-44100 Ferrara (IT); Pennini, Gianni, I-44044 Porotto (FE) (IT)
(74) Representative: Zanoli, Enrico

(56) References cited:
- EP-A- 0 065 700
- EP-A- 0 097 131
- EP-A- 0 119 963
- EP-A- 0 423 861
- EP-A- 0 553 805

## Description

The present invention relates to a process for the preparation of homopolymers and copolymers of ethylene having a broad molecular weight distribution (MWD), wherein the copolymers contain up to 20% by mole of an α-olefin CH₂=CHR, wherein R is a hydrocarbon radical having 1-10 carbon atoms.

The polymerisation is carried out in the presence of catalysts comprising the product of reaction between an Al-alkyl compound and a solid catalyst component comprising a titanium compound supported on a magnesium halide having spherical morphology and particular surface characteristics.

By the process of the invention, ethylene homopolymers and copolymers can be prepared containing over 80% by mole of units deriving from ethylene, characterised by a high melt flow ratio (F/E) value, which is the ratio between the melt index measured with a 21.6 Kg load (melt index F) and the melt index measured with a 2.16 Kg load (melt index E), determined at 190°C according to ASTM D-1238. Said ratio F/E is generally considered as an indication of the width of molecular weight distribution.

The MWD is a particularly important characteristic for ethylene (co)polymers, in that it affects both the rheological behaviour and therefore the processability of the melt, and the final mechanical properties. Polyolefins having a broad MWD, particulary coupled with relatively high average molecular weights, are preferred in high speed extrusion processing and in blow molding, conditions in which a narrow MWD could cause melt fracture.

It is known how to obtain broad MWD by multistep processes based on the production of different molecular weight polymer fractions in single stages, sequentially forming macromolecules with different lenght on the catalyst particles.

The control of the molecular weight obtained in each step can be carried out according to different methods, for example by varying the polymerisation conditions or the catalyst system in each step, or by using a molecular weight regulator. Regulation with hydrogen is the preferred method either working in solution or in gas phase.

A problem typically found in the processes of this type is that of not leading to sufficiently homogenous products, especially in cases of very broad molecular weight distributions. It is in fact difficult to obtain products having a high F/E ratio, for example higher than 100, which when subjected to a transformation process, yield products free from unmelt particles.

A solution to this problem is described in a co-pending patent application in the name of the Applicant relating to the apparatus and process for the preparation of olefin (co)polymers showing a broad MWD; polymers having a high F/E ratio value and high composition homogeneity are obtained by a completely continuous process carried out in two or more reactors in gas phase, which provides a polymer recycle between the reactors.

EP-A-65700 discloses catalyst components obtained by the reaction between a titanium halide and MgCl₂-based carriers, containing from 1.5 to 20% of residual -OH groups, which are obtained by spray-drying MgCl₂-EtOH solutions. The weight reaction ratio between the titanium halide and the MgCl₂ of the carrier has to be kept within the 0.001 to 2 range. Unsatisfactory results in terms of activity and productivity are disclosed when higher ratios are used. The disclosure does not provide any information about the influence of the catalyst components on the Molecular Weight Distribution.

It has now surprisingly been found that it is possible to prepare ethylene polymers and copolymers having a broad molecular weight distribution, when the polymerisation process is carried out in the presence of a catalyst prepared by using a solid component comprising titanium supported on magnesium chloride in active form. The solid component is characterised by having a spherical morphology and particular surface and porosity characteristics.

In the process of the invention, ethylene or mixtures thereof with α-olefins CH₂=CHR, where R is a hydrocarbon radical having 1-10 carbon atoms, is polymerised in the presence of a catalyst comprising the product of reaction between:
(A) a solid component having spherical morphology comprising a titanium compound, supported on magnesium halide, containing more that one Ti-halogen bond and optionally containing groups different from halogen in an amount lower than 0.3 mole per mole of titanium, said component having a surface area, determined by BET method, of lower than 70 m²/g, a total porosity, measured by the mercury method, of higher than 0.5 cm³/g and a pore radius such that at least 50% have values higher than 80 nm (800 Å);
(B) and Al-alkyl compound.

Preferably the Al-alkyl compound is an Al-trialkyl for example Al-trimethyl, Al-triethyl or Al-triisobutyl.

The component (A) preferably has a porosity comprised between 0.6 and 0.9 cm³/g and a surface area comprised between 40 and 60 m²/g.

Among the titanium components TiCl₄ or TiCl₃ are preferred.

The particles of the solid component have a substantially spherical morphology and an average diameter comprised between 5 and 150 µm. For particles having a substantially spherical morphology, those are intended whose ratio between the largest axis and the smaller axis is equal to or lower than 1.5 and preferable lower than 1.3.

Magnesium dihalides comprised in the spherical component of the invention are in the active form and are characterised by X ray spectra in which the most intense line that appears in the spectra of the non-activated halide is diminished in intensity and is substituted by a halo whose maximum intensity is shifted towards angles lower than that of the most intense line.

Preferably the magnesium halide is MgCl₂.

Spherical components used in the process of the invention can be conveniently be prepared according to a process comprising the reaction between:
- (I) a MgCl₂.mROH compound, where 0≤m≤0.5 and R is a alkyl, cycloalkyl or aryl radical having 1-12 carbon atoms;
- (II) a titanium compound of formula Ti(OR)ₙX_{y-n} in which n is comprised between 0 and 0.3 inclusive, y is the valency of titanium, X is halogen and R is an alkyl radical having 2-8 carbon atoms or a COR group.

In this process the compound (I) is prepared by chemical dealcoholation of adducts MgCl₂.pROH, with 0.1 ≤ p ≤ 2, which in turn are obtained by thermal dealcoholation of adducts MgCl₂.qROH, wherein 2.5 ≤ q ≤ 3.5.

In the reaction between the compound (II) and the compound (I) the molar ratio of Ti/Mg is higher than 3.

Adducts MgCl₂.qROH are prepared in spherical form from molten adducts by emulsifying them in liquid hydrocarbon and thereafter solidifying them by quick cooling. Representative methods for the preparation of these spherulized adducts are reported in USP 4,469,648,. Another useable method for the spherulization is spray cooling described in USP 5,100,849 and 4,829,034. The thus obtained spherulized adducts are subjected to thermal dealcoholation at temperatures comprised between 50 and 150°C until the alcohol content is of values lower than 2 and preferably between 1.5 and 0.3 per mole of magnesium dihalide, and finally treated with chemical reagents able to react with OH groups of the alcohol and further dealcoholate the adduct bringing the content to values generally lower than 0.5 moles.

The treatment with chemical dealcoholating agents is carried out using sufficient amounts of agent to react with the OH present in the alcohol of the adduct. It is preferable to work with a slight excess of said agent which is then separated before reacting the titanium compound with the so obtained support.

The chemical dealcoholating agents comprise for example Al-alkyl compounds, such as for example Al(C₂H₅)₃, Al(C₂H₅)₂Cl, Al(iBu)₃, halogenated Si and Sn compounds such as SiCl₄ and SnCl₄.

Preferred titanium compounds (II) are titanium tetrahalides, in particular TiCl₄. In this case the compound obtained after chemical dealcoholation is suspended at low temperature, in an excess of TiCl₄. The suspension is then heated at temperatures comprised between 80 and 135°C and is kept this temperature for a time period comprised between 0.5 and 2 hours. The excess titanium is separated at high temperatures by filtration or sedimentation and siphoning, also carried out at high temperatures. The treatment with TiCl₄ can optionally be repeated many times.

If the titanium compound is a solid, such as for example TiCl₃, this can be supported on the magnesium halide by dissolving it in the starting molten adduct.

In the case that the chemical dealcoholation of the adduct MgCl₂.pROH is carried out with agents having the capacity to reduce, for example an Al-alkyl compound such as Al-triethyl, the adduct itself can be treated with a deactivating agent, for example O₂ or an alcohol, before the reaction with the titanium compound, in order to deactivate the Al-triethyl optionally still present thus avoiding the reduction of the titanium compound.

The treatment with deactivating agents is avoided when it is desired to at least partially reduce the titanium compound. If, on the contrary , a higher degree of reduction of the titanium compound is desired, the process for the preparation of the component can advantageously comprise the use of reducing agents.

As examples of reducing compounds, Al-alkyls, such as for example Al-trialkyls and Al-alkyl halides or silicon compounds, such as polyhydrosiloxanes, can be mentioned.

The polymerisation process of the invention can be carried out in liquid or gas phase using for example the known techniques of fluidised bed or under conditions in which the polymer is mechanically stirred.

Preferably the process is carried out in the gas phase.

As molecular weight regulator, hydrogen is preferred.

By working in a single step it is already possible to obtain polymers having a ratio F/E higher than 90-100 and endowed with remarkable composition homogeneity. MWD can be further broadened if the polymerisation is carried out in more steps operating with different concentrations of molecular weight regulator.

In the case that the polymerisation takes place in one or more reactors in gas phase, the process of the invention is suitably carried out according to the following steps:
(a) contact of the catalyst components in the absence of polymerisable olefin or optionally in the presence of said olefin in amounts not greater than 20 g per gram of the solid component (A);
(b) prepolymerisation of ethylene or mixtures thereof with one or more α-olefins, said mixtures containing up to 20% by mole of α-olefin, forming amounts of polymer from 30 g per gram of solid component (A) up to 1000 g per gram;
(c) gas phase polymerisation of ethylene or mixtures thereof with α-olefins CH₂=CHR, in which R is a hydrocarbon radical having 1-10 carbon atoms, in one or more fluidised or mechanically stirred bed reactors using the prepolymer-catalyst system coming from (b) and circulating through the reactor an alkane, having a number of carbon atoms from 3 to 5, said alkane being present in concentrations of from 20 to 90% molar with respect to the total gases.

In the prepolymerisation step (b) between 100 and 400 g of polymer per gram of solid component (A) is preferably produced.

Preferably the alkane is propane.

In step (b), it is also possible to prepolymerise propylene or mixtures thereof with ethylene and/or α-olefins CH₂=CHR in such a way to obtain propylene polymers having an insolubility in xylene of higher than 60% and preferably higher than 90%, in the above described amounts. In this case, as known, the catalyst will have to also comprise internal electron donor compounds and optionally external electron donors in order to be able to produce polymers showing the requested characteristics.

In order to improve the properties of the product, the process of the invention can be performed in two reactors working under different conditions and by recycling, at least partially, the polymer which is formed in the second reactor to the first reactor.

The process of the invention is suitable for the production of high density ethylene polymers (HDPE, having a density higher than 0.940 g/cm³), comprising ethylene homopolymers and copolymers of ethylene with alpha-olefins having 3-12 carbon atoms; linear low density polyethylenes (LLDPE, having a density lower than 0.940 g/cm³) and very low density and ultra low density (VLDPE and ULDPE, having a density lower than 0.920 g/cm³, to 0.880 g/cm³) consisting of copolymers of ethylene with one or more alpha-olefins having from 3 to 12 carbon atoms, having a mole content of units derived from the ethylene higher than about 80%.

The preparation of HDPE, wherein the width of the molecular weight distribution is particularly important, is the preferred preparation.

The following examples are given to describe and not to limit the invention.

The properties are determined according to the following methods:
- Porosity and surface area with nitrogen: are determined according to the B.E.T. method (apparatus used SORPTO-MATIC 1900 by Carlo Erba).
- Porosity and surface area with mercury: are determined by immersing a known amount of mercury into the dilatometer and then hydraulically increasing the mercury pressure in a gradual manner up to 2000 kg/cm². The pressure of introduction of the mercury into the pores depends on the diameters of the pores themselves. The measurement is carried out using a porosimeter "Porosimeter 2000 series" by Carlo Erba. From the data of the decreasing volume of the mercury and from applied pressure values, the porosity, the distribution of pores and the surface area is calculated.
- Size of the catalyst particles: are determined according to a method based on the principle of the optical diffraction of the laser monochromatic light by means of the apparatus "Malvern Instr. 2600".
- MIE flow index: ASTM-D 1238
- MIF flow index: ASTM-D 1238
- Flowability: is the time employed for 100 g of polymer to flow through a funnel having an outlet hole of 1.25 cm diameter and the walls having a 20° inclination to the vertical.
- Bulk density: DIN-53194
- Morphology and granulometric distribution of the polymer particles: ASTM-D 1921-63
- Fraction soluble in xylene: determined at 25°C.
- Comonomer content: percentage by weight of comonomer determined by I.R. spectrum.
- Effective density: ASTM-D 792

### EXAMPLE

### PREPARATION OF THE SPHERICAL SUPPORT (ADDUCT MgCl₂/EtOH)

The magnesium chloride and alcohol adduct was prepared following the method described in example 2 of USP 4,399,054, but working at 2000 RPM instead of 10000 RPM.

The adduct containing about 3 moles of alcohol had an average size of about 60 µm with a dispersion range of about 30-90 µm.

### EXAMPLE 1

### Preparation of the solid component

The spherical support, prepared according to the general method underwent a thermal treatment, under N₂ stream, over a temperature range of 50-150°C until spherical particles having a residual alcohol content of about 35% (1.1 mole of alcohol for each MgCl₂ mole) were obtained.

2700 g of this support were introduced into a 60 l autoclave together with 38 l of anhydrous hexane. Under stirring and at room temperature 11.6 litres of hexane solution containing 100 g/l of AlEt₃ were fed over 60 minutes.
The temperature was raised to 50°C over 60 minutes and was maintained at that temperature for a further 30 minutes whilst stirring. The liquid phase was removed by filtration; the treatment with AlEt₃ was repeated twice again under the same conditions. The spherical product obtained was washed three times with anhydrous hexane and dried at 50°C under vacuum.

The thus obtained support showed the following characteristics:

| | |
|---|---|
| - porosity (Hg) | 1.144 g/cm³ |
| - surface area (Hg) | 15.2 m²/g |
| - OEt residual | 5.5% (by weight) |
| - Al residual | 3.6% (by weight) |
| - Mg | 20.4% (by weight) |

Into a 72 l steel reactor provided with stirrer 40 litres of TiCl₄ were introduced; at room temperature and whilst stirring 1900 g of the above described support were introduced. The whole was heated to 100°C over 60 minutes and these conditions were maintained for a further 60 minutes. The stirring was interrupted and after 30 minutes the liquid phase was separated from the sedimented solid. Two further treatments were carried out under the same conditions with the only difference that in the first of these treatment it was carried out at 120°C and in the second at 135°C. Thereafter 7 washings with anhydrous hexane (about 19 litres) were carried out three of which were carried out at 60°C and 4 at room temperature. 2400 g of component in spherical form were obtained which, after drying under vacuum at about 50°C, showed the following characteristics:

| | |
|---|---|
| - Total titanium | 6 % (by weight) |
| - Ti^{III} | 4.9 % (by weight) |
| - Al | 3 % (by weight) |
| - Mg | 12.2 % (by weight) |
| - Cl | 68.2 % (by weight) |
| - OEt | 0.3 % (by weight) |
| - porosity (B.E.T.) | 0.208 cm³/g, 50% of which was due to pores with radius >300 Å |
| - surface area (B.E.T.) | 56.2 m²/g |
| - total porosity (Hg) | 0.674 cm³/g, 50% of which was due to pores with radius >125 nm (1250 Å). |
| - surface area (Hg) | 21 m²/g |

### Ethylene polymerization (HDPE)

Into a 2.4 litre stainless steel autoclave, degassed under N₂ stream at 70°C, 2000 cc of anhydrous hexane, 0.0095 g of spherical component and 0.5 g of Al-triisobutyl were introduced. The autoclave was stirred, heated to 75°C and thereafter 3 bar of H₂ and 7 bar of ethylene were fed.

The polymerization lasted 3 hours during which ethylene was fed to keep the pressure constant.

350 g of polymer was obtained having the following characteristics:

| | | |
|---|---|---|
| - MIE | | 0.12 g/10 min |
| - MIF/MIE | | 120 |
| - effective density | | 0.960 g/cm³ |
| - bulk density | | 0.32 g/cm³ |
| - flowability | | 11 seconds |
| - morphology | | spherical |
| - P.S.D. | > 4000 µm | 0.6% (by weight) |
| | 2000-4000 µm | 87.8% (by weight) |
| | 1000-2000 µm | 11% (by weight) |
| | 500-1000 µm | 0.3% (by weight) |
| | < 500 µm | 0.3 (by weight) |

### EXAMPLE 2

Into the same autoclave as example 1, after having fed 0.0122 g of spherical component and 0.5 g of Al-triisobutyl at a temperature of 30°C, 7 bar of ethylene and 3 bar of H₂ were fed. This was kept at 30°C until the system had adsorbed about 5 g of ethylene. Then the whole was heated to 75°C and was polymerized for 3 hours feeding ethylene in order to maintain the pressure constant. 290 g of polymer were obtained having the following characteristics:

| | | |
|---|---|---|
| - MIE | | 0.15 g/10 min |
| - MIF/MIE | | 120 |
| - Bulk density | | 0.36 g/cm³ |
| - flowability | | 11 sec |
| - morphology | | spherical |
| - P.D.S. | > 4000 µm | 0.1% (by weight) |
| | 2000-4000 µm | 69.7% (by weight) |
| | 1000-2000 µm | 29.3% (by weight) |
| | 500-1000 µm | 0.4% (by weight) |
| | < 500 µm | 0.5% (by weight) |

### EXAMPLE 3

80 g of the support obtained according to example 1, after the treatment with AlEt₃ were treated with dry air in fluid bed for about 4 hours at a temperature of 40°C. After this treatment the support was fed into a reactor in which 800 cc of TiCl₄ at room temperature were contained. Under good stirring the mixture was slowly heated to 100°C and then was kept under these conditions for 60 min. The stirring was interrupted and after having allowed the solid to decant, the liquid phase was separated by siphoning. Two further treatments under the same conditions were carried out with the only difference in that the first of these treatments was carried out at 120°C and the second was carried out at 135°C. Thereafter 7 washings were carried out with hexane at the concentration of about 100 g/l; three of these at 60°C and 4 at room temperature. The component in spherical form was dried under vacuum at 50°C and showed the following characteristics:

| | |
|---|---|
| - Total titanium | 3.1 % (by weight) |
| - Ti^{III} | < 0.1 % (by weight) |
| - Mg | 19.1 % (by weight) |
| - Cl | 67.9% (by weight) |
| - OEt residual | 0.6% (by weight) |
| - Al | 3.5% (by weight) |
| - porosity (B.E.T.) | 0.155 cm³/g, 50% of which was due to pores with radius >300 Å |
| - surface area (B.E.T.) | 57.8 m²/g |
| - total porosity (Hg) | 0.751 cm³/g, 50% of which was due to pores with radius >160 nm (1600 Å). 90% of pores have a radius up to 1500 nm (15000 Å). |
| - surface area (Hg) | 26.8 m²/g |

### Ethylene polymerization (HDPE)

O.0106 g of spherical component were used in the ethylene polymerization under the same conditions described in example 1.
380 g of polymer were obtained having the following characteristics:

| | | |
|---|---|---|
| - MIE | | 0.565 g/10 min |
| - MIF/MIE | | 90 |
| - bulk density | | 0.34 g/cm³ |
| - morphology | | spherical |
| - flowability | | 12 sec |
| - P.S.D. | > 4000 µm | 0.3% (by weight) |
| | 2000-4000 µm | 85.3% (by weight) |
| | 1000-2000 µm | 13.7% (by weight) |
| | 500-1000 µm | 0.5% (by weight) |
| | < 500 µm | 0.1% (by weight) |

## Claims

1. Process for the preparation of ethylene homopolymers and copolymers having a broad molecular weight distribution, said copolymers containing up to 20% by mole of α-olefin CH₂=CHR, in which R is a hydrocarbon radical having 1-10 carbon atoms, wherein a catalyst is used comprising the product of reaction between:
(A) a solid component having spherical morphology comprising a titanium compound, supported on magnesium halide, containing at least one Ti-halogen bond and which may contain groups different from halogen in an amount lower than 0.3 mole per mole of titanium, said component having a surface area, determined by BET method, between 40 and 60 m²/g, a total porosity, measured by the mercury method, between 0.6 and 0.9 cm³/g and a pore radius such that at least 50% have values higher than 80 nm (800 Å);
(B) and Al-alkyl compound.

2. Process according to claim 1 wherein the titanium compound present in the solid component is selected from TiCl₄ and TiCl₃.

3. Process according to claim 1, wherein the Al-alkyl compound is Al-trialkyl.

4. Process according to claim 1, wherein the component (A) is prepared according to a process which comprises the reaction between:
(I) a MgCl₂.mROH compound, where 0≤m≤0.5 and R is a alkyl, cycloalkyl or aryl radical having 1-12 carbon atoms;
(II) a titanium compound of formula Ti(OR)ₙX_{y-n} in which n is comprised between 0 and 0.3 inclusive, y is the valency of titanium, X is halogen and R is an alkyl radical having between 2-8 carbon atoms or a COR group.
wherein the compound (I) is prepared by chemical dealcoholation of adducts MgCl₂.pROH, with 0.1 ≤ p ≤ 2, which in turn are obtained by thermal dealcoholation of adducts MgCl₂.qROH, wherein 2.5 ≤ q ≤ 3.5 and which in the reaction between the compound (II) and the compound (I) the molar ratio of Ti/Mg is higher than 3.

5. Process according to claim 4 wherein the titanium compound (II) is TiCl₄.

6. Process according to claim 4 wherein the compound (II) is TiCl₄ and the reaction between the compound (I) and the compound (II) is carried out in TiCl₄.

7. Process according to claim 1 wherein the polymerisation is carried out in the gas phase.

8. Process according to claim 1 wherein the polymerisation is carried out in a single reactor thus obtaining polymers showing a degree ratio F/E >90.

9. Process according to claim 7 wherein the polymerisation is carried out in a single reactor thus obtaining polymers showing a degree ratio F/E >90.

10. Process according to claim 1 wherein the polymerisation is carried out in two or more reactors running under different conditions.

11. Process according to claim 1 wherein the polymerisation is carried out in two or more reactors running with different concentrations of molecular weight regulator.

12. Process according to claim 11 wherein the molecular weight regulator is H₂.

13. Process according to claim 12 wherein the polymerisation is carried out in the gas phase.

14. Process according to claim 7 wherein the polymerisation is carried out according to the following steps:
(a) contact of the catalyst components in the absence of polymerisable olefin or optionally in the presence of said olefin in amounts not greater than 20 g per gram of the solid component (A);
(b) prepolymerization of ethylene or mixtures thereof with one or more α-olefins containing up to 20% by mole of α-olefin, forming amounts of polymer from 30 g per gram of solid component (A) up to 1000 g per gram;
(c) gas phase poiymerisation of ethylene or mixtures thereof with α-olefins CH₂=CHR, in which R is a hydrocarbon radical having 1-10 carbon atoms, in one or more fluidized or mechanically stirred bed reactors using the prepolymer-catalyst system coming from (b) and circulating through the reactors an alkane, having a number of carbon atoms from 3 to 5, said alkane being present in concentrations of from 20 to 90% molar with respect to the total gases.

15. Process according to claim 14 wherein in the prepolymerisation step (b) from 100 to 400 grams of polymer per gram of solid component (a) are produced.

16. Process according to claim 14 wherein the alkane is propane.

17. Process according to claim 16 wherein the polymerisation is carried out in two or more steps working with different hydrogen concentrations.

18. Process according to claim 7 wherein the polymerisation is carried out in two reactors working under different conditions and wherein the polymer formed in the second reactor is at least partially recycled into the first reactor.

19. Process according to one or more of the preceding claims wherein a high density polyethylene is prepared.

## Patentansprüche

1. Verfahren zur Herstellung von Ethylenhomopolymeren und -copolymeren mit einer breiten Molekulargewichtsverteilung, wobei die Copolymere bis zu 20 Molprozent α-Olefin CH₂=CHR, worin R einen Kohlenwasserstoffrest mit 1-10 Kohlenstoffatomen darstellt, enthalten, wobei ein Katalysator verwendet wird, umfassend das Produkt der Reaktion zwischen:
(A) einer festen Komponente mit kugelförmiger Morphologie, umfassend eine auf Magnesiumhalogenid getragene Titanverbindung, die mindestens eine Ti-Halogen-Bindung enthält und die von Halogen verschiedene Gruppen in einer Menge geringer als 0,3 Mol pro Mol Titan, enthalten kann, wobei die Komponente eine durch das BET-Verfahren bestimmte Oberfläche zwischen 40 und 60 m²/g, eine durch das Quecksilberverfahren gemessene Gesamtporosität zwischen 0,6 und 0,9 cm³/g und einen Porenradius, so daß mindestens 50% Werte aufweisen, die höher als 80 nm (800 Å) sind, aufweist;
(B) und einer Al-Alkylverbindung.

2. Verfahren nach Anspruch 1, wobei die Titanverbindung, die in der festen Komponente vorliegt, ausgewählt ist aus TiCl₄ und TiCl₃.

3. Verfahren nach Anspruch 1, wobei die Al-Alkylverbindung Al-Trialkyl darstellt.

4. Verfahren nach Anspruch 1, wobei die Komponente (A) gemäß einem Verfahren hergestellt wird, das die Reaktion umfaßt zwischen:
(I) einer MgCl₂·mROH-Verbindung, worin 0 ≤ m ≤ 0,5 und R einen Alkyl-, Cycloalkyl- oder Arylrest mit 1-12 Kohlenstoffatomen bedeutet;
(II) einer Titanverbindung der Formel Ti(OR)ₙX_{y-n}, worin n zwischen 0 und einschließlich 0,3 umfaßt ist, y die Wertigkeit des Titans darstellt, X Halogen darstellt und R einen Alkylrest mit zwischen 2-8 Kohlenstoffatomen oder eine COR-Gruppe darstellt,
wobei die Verbindung (I) durch chemische Entalkoholisierung von Addukten MgCl₂·pROH, mit 0,1 ≤ p ≤ 2, die wiederum durch thermische Entalkoholisierung von Addukten MgCl₂·qROH, worin 2,5 ≤ q ≤ 3,5, erhalten werden und wobei in der Reaktion zwischen der Verbindung (II) und der Verbindung (I) das Molverhältnis von Ti/Mg höher als 3 ist, hergestellt wird.

5. Verfahren nach Anspruch 4, wobei die Titanverbindung (II) TiCl₄ ist.

6. Verfahren nach Anspruch 4, wobei die Verbindung (II) TiCl₄ ist und die Reaktion zwischen der Verbindung (I) und der Verbindung (II) in TiCl₄ ausgeführt wird.

7. Verfahren nach Anspruch 1, wobei die Polymerisation in der Gasphase ausgeführt wird.

8. Verfahren nach Anspruch 1, wobei die Polymerisation in einem einzigen Reaktor ausgeführt wird, wobei somit Polymere, die einen Verhältnisgrad von F/E > 90 aufweisen, erhalten werden.

9. Verfahren nach Anspruch 7, wobei die Polymerisation in einem einzigen Reaktor ausgeführt wird, wobei somit Polymere, die einen Verhältnisgrad von F/E > 90 aufweisen, erhalten werden.

10. Verfahren nach Anspruch 1, wobei die Polymerisation in zwei oder mehreren Reaktoren ausgeführt wird, die unter unterschiedlichen Bedingungen betrieben werden.

11. Verfahren nach Anspruch 1, wobei die Polymerisation in zwei oder mehreren Reaktoren ausgeführt wird, die mit unterschiedlichen Konzentrationen an Molekulargewichtsregulator betrieben werden.

12. Verfahren nach Anspruch 11, wobei der Molekulargewichtsregulator H₂ ist.

13. Verfahren nach Anspruch 12, wobei die Polymerisation in der Gasphase ausgeführt wird.

14. Verfahren nach Anspruch 7, wobei die Polymerisation gemäß den nachfolgenden Schritten ausgeführt wird:
(a) Kontakt der Katalysatorkomponenten in Abwesenheit von polymerisierbarem Olefin oder gegebenenfalls in Anwesenheit des Olefins in Mengen, die nicht größer als 20 g pro Gramm der festen Komponente (A) sind;
(b) Prepolymerisation von Ethylen oder Gemischen davon mit einem oder mehreren α-Olefinen, die bis zu 20 Molprozent α-Olefin enthalten, Bilden von Polymermengen aus 30 g pro Gramm fester Komponente (A) bis zu 1000 g pro Gramm;
(c) Gasphasenpolymerisation von Ethylen oder Gemischen davon mit α-Olefinen CH₂=CHR, worin R einen Kohlenwasserstoffrest mit 1-10 Kohlenstoffatomen darstellt, in einem oder mehreren Wirbelschicht- oder mechanisch gerührten Bettreaktoren unter Verwendung des Prepolymer-Katalysatorsystems, das aus (b) kommt, und im Kreislauf führen eines Alkans mit einer Kohlenstoffatomanzahl von 3 bis 5 durch die Reaktoren, wobei das Alkan in Konzentrationen von 20 bis 90 Mol-%, bezogen auf die gesamten Gase, vorliegt.

15. Verfahren nach Anspruch 14, wobei in dem Prepolymerisationsschritt (b) 100 bis 400 Gramm Polymer pro Gramm fester Komponente (a) erzeugt werden.

16. Verfahren nach Anspruch 14, wobei das Alkan Propan ist.

17. Verfahren nach Anspruch 16, wobei die Polymerisation in zwei oder mehreren Arbeitsschritten mit unterschiedlichen Wasserstoffkonzentrationen ausgeführt wird.

18. Verfahren nach Anspruch 7, wobei die Polymerisation in zwei Reaktoren, die unter unterschiedlichen Bedingungen arbeiten, ausgeführt wird und wobei das in dem zweiten Reaktor gebildete Polymer mindestens teilweise zu dem ersten Reaktor zurückgeführt wird.

19. Verfahren nach einem oder mehreren der vorangehenden Ansprüche, wobei ein hochdichtes Polyethylen hergestellt wird.

## Revendications

1. Procédé de préparation d'homopolymères et de copolymères d'éthylène ayant une large distribution de masses moléculaires, ledits copolymères contenant jusqu'à 20 % molaire d'α-oléfine CH₂=CHR, où R est un radical hydrocarboné comportant 1 à 10 atomes de carbone, dans lequel on utilise un catalyseur comprenant le produit de la réaction entre :
(A) un constituant solide ayant une morphologie sphérique comprenant un dérivé de titane, supporté sur de l'halogénure de magnésium, contenant au moins une liaison titane-halogène et qui peut renfermer des groupes autres qu'halogène en une quantité inférieure à 0,3 mole par mole de titane, ledit constituant ayant une surface spécifique, déterminée par la méthode BET, comprise entre 40 et 60 m²/g, une porosité totale, mesurée par la méthode au mercure, comprise entre 0,6 et 0,9 cm³/g et un rayon de pores tel qu'au moins 50 % ont des valeurs supérieures à 80 nm (800 Angstroems) ;
(B) un dérivé alkylaluminium.

2. Un procédé selon la revendication 1, dans lequel le dérivé de titane présent dans le constituant solide est choisi parmi TiCl₄ et TiCl₃.

3. Un procédé selon la revendication 1, dans lequel le dérivé alkyl-Al est un trialkylaluminium.

4. Un procédé selon la revendication 1, dans lequel le constituant (A) est obtenu par un procédé qui comprend la réaction entre :
(I) un dérivé MgCl_{2.}mROH, où 0≤m≤0,5 et R est un radical alkyle, cycloalkyle ou aryle comportant de 1 à 12 atomes de carbone ;
(II) un dérivé de titane de formule Ti(OR)ₙX_{y-n} dans lequel n est compris entre 0 et 0,3, bornes comprises, y est la valence du titane, X est un halogène et R est un radical alkyle comportant de 2 à 8 atomes de carbone ou un groupe COR ;
où le composé (A) est obtenu par désalcoolisation chimique d'adducts MgCl₂.pROH avec 0,1≤p≤2, qui lui-même s'obtient par désalcoolisation thermique d'adducts MgCl₂.qROH où 2,5≤q≤3,5, et où, dans la réaction entre le composé (II) et le composé (I) le rapport molaire Ti/Mg est supérieur à 3.

5. Un procédé selon la revendication 4, dans lequel le dérivé (II) de titane est TiCl₄.

6. Un procédé selon la revendication 4, dans lequel le dérivé (II) de titane est TiCl₄ et la réaction entre le composé (I) et le composé (II) est effectuée dans TiCl₄.

7. Un procédé selon la revendication 1, dans lequel on effectue la polymérisation en phase gazeuse.

8. Un procédé selon la revendication 1, dans lequel on effectue la polymérisation dans un réacteur unique pour obtenir un polymère présentant un rapport d'indices F/E > 90.

9. Un procédé selon la revendication 7, dans lequel on effectue la polymérisation dans un réacteur unique pour obtenir un polymère présentant un rapport d'indices F/E > 90.

10. Un procédé selon la revendication 1, dans lequel on effectue la polymérisation dans deux ou plusieurs réacteurs opérant dans des conditions différentes.

11. Un procédé selon la revendication 1, dans lequel on effectue la polymérisation dans deux ou plusieurs réacteurs opérant avec différentes concentrations de régulateurs de poids moléculaire.

12. Un procédé selon la revendication 11 dans lequel le régulateur de poids moléculaire est H₂.

13. Un procédé selon la revendication 12, dans lequel on effectue la polymérisation en phase gazeuse.

14. Un procédé selon la revendication 7, dans lequel on effectue la polymérisation selon les étapes suivantes :
(a) contact des constituants de catalyseur en l'absence d'oléfines polymérisables ou, le cas échéant, en présence de ladite oléfine, en quantité non supérieure à 20 grammes par gramme de constituant solide (A) ;
(b) prépolymérisation de l'éthylène ou de mélanges d'éthylène avec une ou plusieurs α-oléfines contenant jusqu'à 20 % molaires d'α-oléfines en formant des quantités de polymère de 30 grammes par gramme à 1000 grammes par gramme de constituant solide (A);
(c) polymérisation en phase gazeuse de l'éthylène ou de mélanges d'éthylène avec des α-oléfines CH₂=CHR, où R est un radical hydrocarboné comportant 1 à 10 atomes de carbone, dans un ou plusieurs réacteurs à lit fluidisé ou agité mécaniquement en utilisant le système prépolymère-catalyseur provenant de (b) et en faisant circuler dans les réacteurs un alcane, comportant un nombre de carbones compris entre 3 et 5, ledit alcane étant présent à des concentrations de 20 à 90 % molaires par rapport aux gaz totaux.

15. Un procédé selon la revendication 14, dans lequel, dans l'étape de prépolymérisation (b), on obtient de 100 à 400 grammes de polymère par gramme de constituant solide (a).

16. Un procédé selon la revendication 14, dans lequel l'alcane est le propane.

17. Un procédé selon la revendication 16, dans lequel on effectue la polymérisation en deux ou plusieurs étapes en opérant avec différentes concentrations d'hydrogène.

18. Un procédé selon la revendication 17, dans lequel on effectue la polymérisation dans deux réacteurs opérant dans des conditions différentes et dans lesquelles on recycle au moins partiellement le polymère formé dans le second réacteur dans le premier réacteur.

19. Un procédé selon l'une quelconque des revendications précédentes, dans lequel on prépare un polyéthylène haute densité.
